# EUROPÄISCHE PATENTSCHRIFT

(11) **EP 0 956 277 B1**
(45) Veröffentlichungstag und Bekanntmachung des Hinweises auf die Patenterteilung: **05.06.2002**
(21) Anmeldenummer: 98906871.3
(22) Anmeldetag: 13.01.1998
(51) Int. Cl.: C04B 38/08, C04B 28/26, C04B 14/18

(54) **LEICHTWERKSTOFF ENTHALTEND GEBLÄHTEN PERLIT UND VERFAHREN ZUR HERSTELLUNG DESSELBEN**
LIGHTWEIGHT MATERIAL CONTAINING BLOWN PERLITE AND METHODS OF PRODUCING THE SAME
MATERIAU LEGER CONTENANT DE LA PERLITE SOUFFLEE ET PROCEDES PERMETTANT DE LE PRODUIRE

(30) Priorität: 25.01.1997 DE 19702699
(43) Veröffentlichungstag der Anmeldung: 17.11.1999
(73) Patentinhaber: MARMORIT GmbH, 79283 Bollschweil (DE)
(72) Erfinder: PFEMETER, Alfred, D-79189 Bad Krozingen (DE)
(74) Vertreter: Werner, Hans-Karsten, Dr.Dipl.-Chem.
(86) Internationale Anmeldenummer: EP9800149
(87) Internationale Veröffentlichungsnummer: WO9832713

(56) Entgegenhaltungen:
- DE-A- 3 921 278
- US-A- 4 462 835
- CHEMICAL ABSTRACTS, vol. 91, no. 14, 1.Oktober 1979 Columbus, Ohio, US; abstract no. 111594v, Seite 237; XP000063904 & SU 667 533 A
- CHEMICAL ABSTRACTS, vol. 106, no. 10, 9.März 1987 Columbus, Ohio, US; abstract no. 72053z, Seite 321; XP000064519 & SU 1 270 142 A

## Beschreibung

Gegenstand der vorliegenden Erfindung sind Verfahren zur Herstellung von Leichtwerkstoff enthaltend geblähten Perlit, Alkalisilikate, gegebenenfalls Zusätze von Härtern für wäßrige Alkalisilikate.

Leichtwerkstoffe enthaltend geblähten Perlit sind Gegenstand der WO 96/04217 der Anmelderin. Sie werden hergestellt, indem silikatische Leichtzuschläge wie Perlit durch Erdalkalihydroxid und wenig Wasser aktiviert und anschließend hydrothermal mit Wasserdampf behandelt werden, wodurch die Teilchen miteinander verbunden werden.

Das Verfahren ist zeitaufwendig und wegen der hydrothermalen Behandlung auch relativ energieaufwendig. Es besteht somit das Bedürfnis nach einem schnelleren, einfacheren und mit geringerem Energieaufwand durchführbaren Verfahren zur Herstellung eines Leichtwerkstoffes.

Aus der DE-A-28 13 745 ist ein biegungssteifes Feststoffverbundmaterial bekannt, welches erhalten wird durch Erhitzen von 20 bis 50 Gew.-Teilen expandiertem Perlit in Form eines feinvermahlenen Pulvers mit 9,5 bis 19 Gew.-Teilen Natriumsilikat oder Kaliumsilikat, 2 bis 9 Gew.-Teilen Zinkoxid und 21,5 bis 67 Gew.-Teilen Wasser einschließlich des Wassergehaltes des Silikates. Vorzugsweise weist die Mischung noch ein Verfestigungsmittel wie Natriumfluorosilikat auf. Das Material wird vorzugsweise in die Form von Halbschalen gebracht, welche Nut und Feder aufweisen und daher zur Wärmeisolierung von Röhren geeignet ist. Als Vorteil dieses Materials wird angegeben, daß es eine glatte, kosmetisch gefällige. Oberfläche und eine hohe Wiederstandsfestigkeit gegen Öl und heißes Wasser aufweist. Das angerührte Material wird nach einer Zwischenlagerung von bis zu 2,5 Stunden erhitzt, wobei außer einer langsamen Erhitzung von außen auch Mikrowellen-Energie zum Einsatz kommen kann. Die Herstellung erfolgt durch Eingießen in Formen und anschließendes Verpressen in einer Hydraulikpresse. Anstelle von Natriumfluorosilikat kann die Härtung auch durch Einpressen von Kohlendioxid bewirkt werden.

Eine Weiterentwicklung dieses Materials ist beschrieben in der EP-A-0 048 570, wobei die Biegefestigkeit erhöht wird durch Zusatz von Phosphaten oder Tonen.

Aus dem Derwent Referat 93-218464/27 ist ein wärmeisolierendes Produkt bekannt, welches aus einer Mischung aus expandiertem Polit und Wasserglas sowie Hydrophobierungsmittel besteht und mit Kohlendioxid zur Aushärtung behandelt wird. Das Produkt enthält 60 Gew.-% expandiertes Perlit mit 40 Gew.-% Wasserglas und eine organosilicatischem Hydrophobierungsmittel. Der Verdichtungsfaktor beträgt 2,5, was eine Reduzierung des Volumens auf 40% entspricht. Das verpreßte System muß mit CO₂ begaßt und anschließend 24 bis 48 Stunden bei Umgebungstemperatur und Umluft getrocknet werden. Dann erfolgt die Aushärtung bei 300 bis 450°C in mehreren Cyclen in CO₂-Atmosphäre.

Aus DE-C-44 38 627 ist eine Isolier- und Ausgleichschüttungsmasse bekannt, die aus 70 Vol.-% expandiertem Perlit und 30 Vol.-% eines Leichtgranulats wie Bims oder Leichtbeton zusammengesetzt ist. Diese Mischung wird mittels Zwangsmischer und Alkaliwasserglas vermischt. Dieses Produkt wird in Säcke verpackt und aus der Baustelle ausgebracht, um dort um 20 bis 30% verdichtet zu werden und an der Luft auszuhärten. Dieses Material weist keine gute mechanische Festigkeit auf. Ein weiterer Nachteil dieses Materials ist, daß es oft schon Anwendung von mechanischem Druck im Sach schnell aushärtet.

US-A-4,462,835 offenbart ein Verfahren zur Herstellung eines Leichtwerkstoffs, bei dem expandierte Perlite mit Wasserglas und einem Hydrophobierungsmittel vermischt und aus dieser Mischung zum Beispiel Platten geformt werden.

Ein ähnliches Verfahren, bei dem jedoch auch Holzfasern verwendet werden können, wird in Chemical Abstracts, 1987, Vol. 106, Nr. 10, no. 72053/USSR SU 1,270,142 beschrieben.

DE-A-3921278 beschreibt ein Verfahren zur Herstellung von leichten Formteilen, die eine Tonmatrix aufweisen und einen Zuschlag von expandiertem Perlit enthalten.

Die Erfindung hat sich die Aufgabe gestellt, einen faserfreien anorganischen, nicht brennbaren und wasserabweisenden Leichtwerkstoff zur Verfügung zu stellen auf Basis von expandiertem Perlit, Alkalisilikaten sowie gegebenenfalls Zusätzen von Härtern für wäßrige Alkalisilikate, welcher leicht und einfach herstellbar ist, keine toxischen Chemikalien benötigt und in einfacher Weise zu Platten, Formkörpern oder Blöcken verarbeitet werden kann, die zur Wärmeisolierung, insbesondere von Wänden und Gebäuden geeignet ist.

Diese Aufgabe wurde jetzt dadurch gelöst, daß expandierter Perlit mit einer Korngröße von 0,8 bis 6 mm eingesetzt wird und ein Hydrophobierungsmittel vorhanden ist, wobei Rohdichten im Bereich von 60 bis 500 kg/m³ erreicht werden. Vorzugsweise wird dabei der Gehalt an expandiertem Perlit auf mindestens 50 Masse-% erhöht. Im Gegensatz zum Stand der Technik wird der expandierte Perlit nicht zu Pulver mit maximaler Korngröße von 0,3 mm vermahlen, sondern in möglichst intaktem Zustand mit der Korngröße von 0,8 bis 6 mm, vorzugsweise der Korngröße im Bereich von 0,8 bis 3,5 mm eingesetzt.

Als Alkalisilikate werden vorzugsweise Natriumwasserglas mit dem Gewichtsmodul 2,0 bis 4,0, vorzugsweise 2,5 bis 3,7 verwendet oder ein Kaliumwasserglas mit einem Gewichtsmodul 1,0 bis 3,0, vorzugsweise 1,8 bis 2,7. Es können auch Mischungen verschiedener Natrium- und Kaliumwassergläser verwendet werden.

Erfindungswesentlich ist, daß die als Bindemittel verwendeten Alkalisilikate ein Hydrophobierungsmittel enthalten. Als Hydrophobierungsmittel haben sich insbesondere Alkylsilikonate bewährt. Prinzipiell sind aber auch andere typische Hydrophobierungsmittel einsetzbar, die im Wasserglas löslich sind und gegen Alkali beständig sind und somit zu einer wasserabweisenden Massenhydrophobierung führen mit einem w-Wert von weniger als 0,5 kg/m²h^{0,5}.

Als Härter für wäßrige Alkalisilikate können übliche flüssige oder feste Härter verwendet werden. Typische geeignete Härter sind zink-, aluminium-, aluminat- und silikathaltige Präparate, Ferosilicium oder Aluminiumphosphate. Diese können entweder in gelöster oder suspendierter Form dem wäßrigen Alkalisilikat zugemischt werden oder nachträglich auf das rieselfähige Produkt aufgesprüht werden. Weiterhin kann der Perlit entweder zunächst mit bis zu 20 Gew.-% Wasser besprüht und dann mit einem unlöslichen Härter vermischt werden, bevor das Gemisch aus wäßrigen Alkalisilikaten und Hydrophobierungsmittel aufgetragen wird, oder der Perlit wird mit dem gelösten oder suspendierten Härter besprüht bevor er mit dem Gemisch aus wäßrigen Alkalisilikaten und Hydrophobierungsmittel vermischt wird. Schließlich läßt sich auch das rieselfähige Produkt mit einem trockenen, pulverförmigen Härter vermischen.

Die Menge an wäßrigem Alkalisilikat sowie zugesetztem Hydrophobierungsmittel sowie gegebenenfalls den Härtern ist grundsätzlich nur so groß, daß der Perlit noch ein rieselfähiges Schüttgut bleibt. Höhere Mengen an wäßrigen Alkalisilikaten und zusätzlichem Wasser, die zum Verklumpen oder Verkleben des Perlits oder gar einer Gießfähigkeit des Gemisches führen, sind zu vermeiden. Derartige Materialien sind entweder nicht oder nur schwer handhabbar und schwer in Formen einfüllbar, oder enthalten unnötig viel Wasser. Dieses zu entfernen kostet mehr Energie und ist deshalb unerwünscht.

Zur Erhöhung der Zugfestigkeit kann der erfindungsgemäß hergestellte Leichtwerkstoff auf einer oder mehreren Oberflächen mit zugfesten Deckschichten versehen werden. Hierzu eignen sich insbesondere wasserdampfdiffusionsoffene oder wasserdampfdichte, aber stets zugfeste Glasfasergewebe, Glasfaservliese, Glasfaserstreifen, Matten oder Streifen aller Art wie Metallfolien, die auch gelocht oder perforiert sein können, sowie Metallgewebe oder Metallstreifen. Sie werden entweder bereits bei der Herstellung der geformten Leichtwerkstoffe angebracht, indem der Boden und/oder die Seitenwände der Formen vor der Befüllung mit dem rieselfähigen Schüttgut mit den zugfesten Materialien abgedeckt werden, wobei diese Materialien zuvor mit einem Bindemittel, vorzugsweise wäßrigen Alkalisilikaten bestrichen, getränkt oder besprüht waren. Gewünschtenfalls kann auch nach dem Befüllen der Formen obenauf eine derartige Schicht aufgelegt werden, bevor die befüllte Form gegebenenfalls etwas zusammengepreßt und dann erhitzt wird. Es ist aber durchaus möglich, im ersten Herstellungsschritt unbedeckt gebliebene Oberflächen nachträglich mit derartigen zugfesten Schichten zu bekleben. Dies erfordert jedoch meist einen zweiten Erhitzungsschritt.

Das Verfahren zur Herstellung des erfindungsgemäßen Leichtwerkstoffes erfolgt im allgemeinen in der Weise, daß die geblähten Perlite mit einer Korngröße von 0,8 bis 6 mm mit einem Gemisch aus wäßrigen Alkalisilikaten und dem Hydrophobierungsmittel sowie gegebenenfalls löslichen oder suspendierten Härtern zu noch immer rieselfähigen Produkten vermischt, in Formen gefüllt, gegebenenfalls etwas zusammengepreßt und dann erhitzt werden.

Sofern Härter für wäßrige Alkalisilikate zur Anwendung kommen sollen, werden diese vorzugsweise als Lösung oder Suspension auf das rieselfähige Produkt gesprüht. Es ist aber auch möglich, diese Härter bereits dem Gemisch aus wäßrigem Alkalisilikat und Hydrophobierungsmittel zuzusetzen, sofern es dabei nicht zu einer zu raschen Reaktion mit den Alkalisilikaten kommt. Insbesondere unlösliche Härter werden vorzugsweise auf angefeuchteten Perlit aufgeklebt, indem dieser zuvor mit bis. zu 20 Gew.-% wasser bezogen auf das Gewicht des Perlits angefeuchtet wird. Dieser angefeuchtete Perlit wird dann mit dem Gemisch aus wäßrigem Alkalisilikat und Hydrophobierungsmittel vermischt.

Das Erhitzen der befüllten und gegebenenfalls etwas zusammengepreßten Formen erfolgt durch Mikrowellen, da dies zu einer besonders gleichmäßigen Erhitzung auch der Innenbereiche führt. Obendrein wurde festgestellt, daß bei der Erhitzung durch Mikrowellen die Festigkeit bis zu 400 % höher liegt als bei einer Erhitzung im Ofen.

Nach dem Einfüllen des Materials in Formen wird vorzugsweise das Endvolumen durch sanftes Andrücken oder Zusammenpressen verringert. Je nach gewählter Einwaage und gewähltem Endvolumen kann damit auch die Rohdichte des Leichtwerkstoffs beeinflußt werden. Zu starkes Pressen führt zu höheren Rohdichten als 500 kg/m³.

Sofern die Formgebung durch Pressen unterstützt wird, können die Formkörper vor dem Erhitzen entformt werden und in dieser Form durch die Mikrowellenanlage hindurch befördert werden. Dabei kann es zweckmäßig sein, den Formkörper auf einer für Mikrowellen durchlässigen Bodenplatte zu belassen und diese mit durch die Durchlaufanlage oder die Bandanlage mitzubefördern. Bei Verwendung von Bandanlagen wird der Körper durch Vor- und Rücklauf durch die Mikrowellenzone getrocknet.

Außer der Unterseite und der Oberseite des Formkörpers können gewünschtenfalls auch die Seitenkanten mit zugfestem Material ausgelegt werden, welche zuvor mit einem Bindemittel wie wäßrigem Alkalisilikat bestrichen, getränkt oder besprüht worden sind.

Ein großer Vorteil der erfindungsgemäß hergestellten Leichtwerkstoffe ist, daß das Erhitzen überwiegend der festen Verklebung der Perlitkörner dient, es jedoch nicht notwendig ist, größere Wassermengen durch Verdampfen zu entfernen. Dies ist ein sehr wesentlicher Kostenfaktor und trägt auch dazu bei, das Material sehr energiesparend herzustellen.

Die erfindungsgemäß hergestellten Leichtwerkstoffe bestehen im allgemeinen aus 50 bis 500 Masse-Teilen geblähtem Perlit, 100 Masse-Teilen wäßrigem Alkalisilikat und 2,0 bis 18,5 Masse-Teilen Hydrophobierungsmittel. Sofern Härter zugesetzt werden, betragen die Mengen 0 bis 100 Masse-Teile.

Der erfindungsgemäß hergestellte Leichtwerkstoff besitzt, bezogen auf die Rohdichte, sehr hohe Haft-, Zug-, Biegezug- und Druckfestigkeiten und eine gute Wärmedämmung. Er enthält wenig oder keine brennbaren Werkstoffe und enthält nur gesundheitlich unbedenkliche Komponenten. Der Leichtwerkstoff kann wasserdampfdiffusionsoffen sein. Er kann jedoch gewünschtenfalls auch mit wässerdampfdichten Außenschichten versehen werden. Seine offenporige Struktur führt zu einer guten Schallabsorption. Die Massehydrophobierung führt zu insgesamt hydrophoben Eigenschaften auch an Bruchstellen und Schnittkanten.

Das erfindungsgemäße Verfahren wird in den nachfolgenden Beispielen näher erläutert:

### Beispiel 1

173,4 Gew.-Teile geblähter Perlit mit einer Korngröße zwischen 1,4 und 2,2 mm wird mit 103,5 Gew.-Teilen eines Gemisches aus 100 Gew.-Teilen Natriumwasserglas (Modul 3,3) und 3,5 Gew.-Teilen Hydrophobierungsmittel (Alkylsilikonat) vermischt zu einem rieselfähigen Schüttgut. Dieses wird in Formen gefüllt, leicht gepreßt und mit Hilfe von Mikrowellen erhitzt. Man erhält ein Produkt mit einer Rohdichte von 115 kg/m³ und einer Haftzugfestigkeit von 132 kN/m².

### Beispiel 2

In analoger Weise wie im Beispiel 1 beschrieben, werden 147,8 Gew.-Teile eines. geblähten Perlits mit einer Korngröße zwischen 2,2 und 2,7 mm mit 103,5 Gew.-Teilen des gleichen Gemisches aus Natriumwasserglas und Hydrophobierungsmittel zu einem rieselfähigen Schüttgut verarbeitet. Nach dem Formen, leicht Anpressen und dem Erhitzen mit Mikrowellen erhält man ein Produkt mit einer Rohdichte von 101 kg/m³ und einer Haftzugfestigkeit von 134 kN/m².

### Beispiel 3 (Vergleichsbeispiel)

Das gleiche Produkt wie im Beispiel 2 wurde nicht mit Mikrowellen behandelt, sondern im Trockenschrank getrocknet. Die Haftzugfestigkeit betrug nur 33 kN/m².

### Beispiel 4

167,2 Gew.-Teile eines geblähten Perlits mit einer Korngröße zwischen 1,4 und 2,2 mm werden mit 103,5 Gew.-Teilen eines Gemisches aus 100 Gew.-Teilen Kaliumwasserglas (Modul 2,2) und 3,5 Gew.-Teilen Hydrophobierungsmittel zu einem rieselfähigen Schüttgut vermischt. Nach dem Verformen und Erhitzen in der Mikrowelle erhält man ein Produkt mit einer Rohdichte von 107 kg/m³ und einer Haftzugfestigkeit von 111 kN/m².

### Beispiel 5

In gleicher Weise wie im Beispiel 4 beschrieben, werden 175 Gew.-Teile geblähter Perlit mit 103,5 Gew.-Teile eines Gemisches aus Wasserglas und Hydrophobierungsmittel zu einem rieselfähigen Schüttgut verarbeitet. Das Wasserglas ist eine Mischung aus 70 Gew.-Teilen Natriumwasserglas (Modul 3,3) und 30 Gew.-Teilen Kaliumwasserglas (Modul 2,2). Das fertige Produkt weist eine Rohdichte von 113 kg/m³ und einer Haftzugfestigkeit von 122 kN/m² auf.

## Patentansprüche

1. Verfahren zur Herstellung eines Leichtwerkstoffes enthaltend geblähte Perlite, Alkalisilikate sowie gegebenenfalls Zusätze von Härtern für wäßrige Alkalisilikate, **dadurch gekennzeichnet, daß** geblähte Perlite mit einer Korngröße von 0,8 bis 6 mm mit einem Gemisch aus wäßrigen Alkalisilikaten und Hydrophobierungsmitteln sowie gegebenenfalls löslichen oder suspendierbaren Härtern zu noch immer rieselfähigen Produkten vermischt, in Formen gefüllt, gegebenenfalls zusammengepreßt und danach mittels Mikrowellen erhitzt werden.

2. Verfahren gemäß Anspruch 1, **dadurch gekennzeichnet, daß** die Korngröße 0,8 bis 3,5 mm beträgt.

3. Verfahren gemäß Anspruch 1 oder 2, **dadurch gekennzeichnet, daß** die Härter als Lösung oder Suspension nachträglich auf das rieselfähige Produkt gesprüht werden.

4. Verfahren gemäß Anspruch 1 oder 2, **dadurch gekennzeichnet, daß** der Perlit zunächst mit bis zu 20 Gew.-% Wasser besprüht und dann mit einem unlöslichen Härter vermischt wird, bevor das Gemisch aus wäßrigen Alkalisilikaten und Hydrophobierungsmittel aufgetragen wird.

5. Verfahren gemäß einem der Ansprüche 1 bis 4, **dadurch gekennzeichnet, daß** der Boden und/oder die Seitenwände der Formen vor der Befüllung mit zugfesten Materialien abgedeckt werden, welche zuvor mit einem Bindemittel, vorzugsweise wäßrigen Alkalisilikaten bestrichen, getränkt oder besprüht waren, und gewünschtenfalls auch die befüllte Form hiermit abgedeckt wird, bevor die befüllte Form gegebenenfalls etwas zusammengepreßt und danach mittels Mikrowellen erhitzt wird.

6. Verfahren gemäß einem der Ansprüche 1 bis 5, **dadurch gekennzeichnet, daß** im ersten Herstellungsschritt unbedeckt gebliebene Oberflächen nachträglich mit zugfesten Schichten beklebt und danach nochmals erhitzt werden.

7. Verfahren gemäß einem der Ansprüche 1 bis 6, **dadurch gekennzeichnet, daß** einige oder alle Oberflächen nachträglich mit einem alkalibeständigen und wasserdampfdiffusionsoffenen oder wasserdampfdichten Material bedeckt werden.

## Claims

1. A process for producing a light-weight material containing expanded perlites, alkali silicates and optionally added hardeners for aqueous alkali silicates, **characterized in that** expanded perlites having a grain size of from 0.8 to 6 mm are mixed with a mixture of aqueous alkali silicates and hydrophobizing agents and optionally soluble or suspensible hardeners to give still free-flowing products, which are filled in molds, optionally compressed and then heated using microwaves.

2. The process according to claim 1, **characterized in that** said grain size is from 0.8 to 3.5 mm.

3. The process according to claim 1 or 2, **characterized in that** said hardeners in the form of a solution or suspension are sprayed later onto said free-flowing product.

4. The process according to claim 1 or 2, **characterized in that** said perlite is first sprayed with up to 20% by weight of water and then mixed with an insoluble hardener before the mixture of aqueous alkali silicates and hydrophobizing agent is applied.

5. The process according to any of claims 1 to 4, **characterized in that** the bottom and/or the side walls of the molds are covered with high-tensile strength materials which have previously been brushed, soaked or sprayed with a binder, preferably aqueous alkali silicates, and, if desired, the filled mold is also covered with such materials, prior to optionally slightly compressing the filled mold and then heating it using microwaves.

6. The process according to any of claims 1 to 5, **characterized in that** high-tensile strength layers are adhered later to surfaces left uncovered in the first production step, followed by another heating step.

7. The process according to any of claims 1 to 6, **characterized in that** some or all surfaces are later covered with an alkali-resistant material which is open to water vapor diffusion or water-vapor impermeable.

## Revendications

1. Procédé de fabrication d'un matériau léger contenant des perlites soufflées, des silicates alcalins ainsi que, le cas échéant, des additifs de durcisseurs pour silicates alcalins aqueux, **caractérisé en ce que** les perlites soufflées d'une granulométrie comprise entre 0,8 et 6 mm, sont mélangées avec un mélange de silicates alcalins aqueux et d'agents d'imperméabilisation ainsi que, le cas échéant de durcisseurs solubles ou pouvant être mis en suspension avec des produits encore coulants, mises dans des moules, le cas échéant compressées puis chauffées aux micro-ondes.

2. Procédé selon revendication 1, **caractérisé en ce que** la granulométrie est comprise entre 0,8 et 3,5 mm.

3. Procédé selon revendication 1 ou 2, **caractérisé en ce que** les durcisseurs sont pulvérisés sur le produit coulant sous forme de solution ou de suspension.

4. Procédé selon revendication 1 ou 2, **caractérisé en ce que** la perlite est pulvérisée tout d'abord avec jusqu'à 20% en poids d'eau puis mélangée à un durcisseur insoluble avant d'appliquer le mélange constitué de silicates alcalins aqueux et d'un agent d'imperméabilisation.

5. Procédé selon l'une des revendications 1 à 4, **caractérisée en ce que** le fond et/ou les parois latérales des moules sont recouverts, avant d'être remplis, par des matériaux résistants à la traction, lesquels ont été préalablement enduits, imprégnés ou aspergés d'un liant, de préférence des silicates alcalins aqueux et **en ce que**, si on le souhaite, le moule rempli en est également recouvert avant de compresser légèrement, le cas échéant, le moule plein et de le chauffer ensuite aux micro-ondes.

6. Procédé selon l'une des revendications 1 à 5, **caractérisé en ce que** les surfaces non recouvertes au cours de la première étape de fabrication sont collées a posteriori avec des couches résistantes à la traction puis chauffées une nouvelle fois.

7. Procédé selon l'une des revendications 1 à 6, **caractérisé en ce que** quelques surfaces ou toutes les surfaces sont en outre recouvertes d'un matériau résistant aux alcalis et permettant la diffusion de vapeur ou étanche à la vapeur d'eau.
